# EUROPEAN PATENT APPLICATION

(11) **EP 4 002 235 A1**
(43) Date of publication of application: **25.05.2022**
(21) Application number: 20315461.2
(22) Date of filing: 19.11.2020
(51) Int. Cl.: G06Q 10/04

(54) **METHOD AND APPARATUS FOR MINIMIZING THE NUMBER OF CONGESTION INCIDENTS IN A RAPID TRANSIT SYSTEM**

(71) Applicant: GeoTwin, 75014 Paris (FR)
(72) Inventor: Bauguion, Pierre-Olivier, 75014 Paris (FR)
(74) Representative: Alatis

(57) **Abstract**

The present invention relates to a method and an apparatus (100) for minimizing the number of congestion incidents in a rapid transit system.

## Description

### FIELD OF THE INVENTION

The present invention relates to rapid transit systems. The present invention, concerns in particular a method and an apparatus for minimizing the number of congestion incidents in a rapid transit system.

### BACKGROUND OF THE INVENTION

Nowadays, flows of people and vehicles in most rapid transit systems are constantly monitored, usually by means of cameras and sensors arranged, for instance, at ticket barriers or in the vehicles, and this is done mainly in order to diagnose disruptions that eventually occur in such systems. However, such means are actually not sufficient to efficiently minimize the number of congestion incidents that eventually occur in rapid transit systems. Indeed, known systems for monitoring flows of people in rapid transit systems usually do not consider the propagation of flows over time, and are thus totally unable to predict what will be the state of a rapid transit system in time. Consequently, such systems are not able to deliver the best recommendations to users that might be or are caught in disruptions right on their way to their destination, and, moreover, they don't succeed in efficiently avoiding users from encountering incoming congestions incidents induced by shockwave effect. Additionally, the known systems and methods for monitoring rapid transit systems may even increase the amplitude of shockwave effects, when some of them like, for instance, the method and the system disclosed in US 15/769,330, provide functionalities that merely suggest to users of rapid transit systems the next best itinerary available to them, whatever may be the consequences for users already en route, or the amount of people that might be able to use alternative/fallback itineraries.

### SUMMARY OF THE INVENTION

The present invention intends to remedy these drawbacks. This goal is achieved, according to a first object of the invention, through a method for minimizing the number of congestion incidents in a rapid transit system, wherein said method comprises the steps of:
- receiving data characterizing at least one itinerary request, wherein said data characterizing at least one itinerary request is transmitted by a first mobile communication device;
- determining data characterizing at least one first directed graph that simulates a current state of said rapid transit system;
- retrieving data characterizing disruptions occurring in said rapid transit system, wherein said data characterizing disruptions occurring in said rapid transit system is retrieved via a connection to an API;
- determining data characterizing at least one second directed graph that simulates a first future state of said rapid transit system on the basis of said data characterizing at least one itinerary request and said data characterizing disruptions occurring in said rapid transit system;
- determining data characterizing at least one value of the risk of at least one congestion incident occurring in said rapid transit system on the basis of said data characterizing at least one second directed graph that simulates a first future state of said rapid transit system;
- determining data characterizing a first itinerary to be followed on the basis of said data characterizing at least one value of the risk of at least one congestion occurring in said rapid transit system; and
- provoking transmission of said data characterizing a first itinerary to be followed to said first mobile communication device.

Specific embodiments of the invention provide that method further comprises the steps of:
- determining data characterizing the availability of data characterizing an acknowledgement transmitted by said first mobile communication device;
- determining data characterizing at least one third directed graph that simulates a second future state of said rapid transit system on the basis of said data characterizing the availability of data characterizing an acknowledgement transmitted by said first mobile communication device;,
- retrieving data characterizing at least one first identification parameter on the basis of said data characterizing at least one third directed graph that simulates a second future state of said rapid transit system;
- determining data characterizing a second itinerary to be followed on the basis of said data characterizing at least one third directed graph that simulates a second future state of said rapid transit system; and
- provoking transmission of data characterizing at least one first notification and of said data characterizing a second itinerary to be followed to at least one second mobile communication device on the basis of said data characterizing at least one first identification parameter.

Specific embodiments of the invention provide that the method further comprises the steps of:
- determining data characterizing the availability of data characterizing an acknowledgment transmitted by said second mobile communication device;
- determining data characterizing at least one fourth directed graph that simulates a third future state of said rapid transit system on the basis of said data characterizing the availability of an acknowledgement transmitted by said second mobile communication device;

- retrieving data characterizing at least one second identification parameter on the basis of said data characterizing at least one fourth directed graph that simulates a third future state of said rapid transit system;
- determining data characterizing a third itinerary to be followed on the basis of said data characterizing at least one fourth directed graph; and
- provoking transmission of data characterizing at least one second notification and of said data characterizing a third itinerary to be followed to said first mobile communication device and/or a third mobile communication device on the basis of said data characterizing at least one second identification parameter.

Specific embodiments of the invention provide that the step of determining data characterizing the availability of data characterizing an acknowledgement transmitted by said first mobile communication device comprises a step of determining data characterizing at least one location of said first mobile communication device and the step of determining data characterizing at least one third directed graph that simulates a second future state of said rapid transit system comprises a step of updating said data characterizing at least one third directed graph that simulates a second future state of said rapid transit system on the basis of said data characterizing at least one location of said first mobile communication device.

Specific embodiments of the invention provide that the step of determining data characterizing the availability of data characterizing an acknowledgement transmitted by said second mobile communication device comprises a step of determining data characterizing at least one location of said second mobile communication device and the step of determining data characterizing at least one fourth directed graph that simulates a third future state of said rapid transit system comprises a step of updating said data characterizing at least one fourth directed graph that simulates a third future state of said rapid transit system on the basis of said data characterizing at least one location of said second mobile communication device.

Specific embodiments of the invention provide that the step of determining data characterizing at least one second directed graph that simulates a first future state of said rapid transit system comprises a step of determining data characterizing at least one directed arc of said second directed graph that simulates a first future state of said rapid transit system which cannot be modified.

Specific embodiments of the invention provide that the step of determining data characterizing at least one third directed graph that simulates a second future state of said rapid transit system comprises a step of determining data characterizing at least one directed arc of said third directed graph that simulates a second future state of said rapid transit system which cannot be modified.

Specific embodiments of the invention provide that the step of determining data characterizing at least one fourth directed graph that simulates a third future state of said rapid transit system comprises a step of determining data characterizing at least one directed arc of said fourth directed graph that simulates a third future state of said rapid transit system which cannot be modified.

Specific embodiments of the invention provide that the step of determining data characterizing a first itinerary to be followed comprises a step of determining data characterizing a first value of the duration a delay.

Specific embodiments of the invention provide that the step of determining data characterizing a second itinerary to be followed comprises a step of determining data characterizing a second value of the duration of a delay.

Specific embodiments of the invention provide that the step of determining data characterizing a third itinerary to be followed comprises a step of determining data characterizing a third value of the duration of a delay.

According to yet another object of the invention, an apparatus for minimizing the number of congestion incidents in a rapid transit system comprises:
at least one processor; and at least one memory including computer program code for one or more programs; the at least one memory and the computer program code configured to, with the at least one processor, cause the apparatus to at least:
- receive data characterizing at least one itinerary request, wherein said data characterizing at least one itinerary request is transmitted by a first mobile communication device;
- determine data characterizing at least one first directed graph that simulates a current state of said rapid transit system;
- retrieve data characterizing disruptions occurring in said rapid transit system, wherein said data characterizing disruptions occurring in said rapid transit system is retrieved via a connection to an API;
- determine data characterizing at least one second directed graph that simulates a first future state of said rapid transit system on the basis of said data characterizing at least one itinerary request and said data characterizing disruptions occurring in said rapid transit system;
- determine data characterizing at least one value of the risk of at least one congestion incident occurring in said rapid transit system on the basis of said data characterizing at least one second directed graph that simulates a first future state of said rapid transit system;
- determine data characterizing a first itinerary to be followed on the basis of said data characterizing at least one value of the risk of at least one congestion occurring in said rapid transit system; and
- provoke transmission of said data characterizing a first itinerary to be followed to said first mobile communication device.

Specific embodiments of the invention provide that the at least one memory and the computer program code configured to, with the at least one processor, cause the apparatus to at least:
- determine data characterizing the availability of data characterizing an acknowledgement transmitted by said first mobile communication device;
- determine data characterizing at least one third directed graph that simulates a second future state of said rapid transit system on the basis of said data characterizing the availability of data characterizing an acknowledgement transmitted by said first mobile communication device;
- retrieve data characterizing at least one first identification parameter on the basis of said data characterizing at least one third directed graph that simulates a second future state of said rapid transit system;
- determine data characterizing a second itinerary to be followed on the basis of said data characterizing at least one third directed graph that simulates a second future state of said rapid transit system; and
- provoke transmission of data characterizing at least one first notification and of said data characterizing a second itinerary to be followed to at least one second mobile communication device on the basis of said data characterizing at least one first identification parameter.

Specific embodiments of the invention provide that the at least one memory and the computer program code configured to, with the at least one processor, cause the apparatus to at least:
- determine data characterizing the availability of data characterizing an acknowledgment transmitted by said second mobile communication device;
- determine data characterizing at least one fourth directed graph that simulates a third future state of said rapid transit system on the basis of said data characterizing the availability of an acknowledgement transmitted by said second mobile communication device;
- retrieve data characterizing at least one second identification parameter on the basis of said data characterizing at least one fourth directed graph that simulates a third future state of said rapid transit system;
- determine data characterizing a third itinerary to be followed on the basis of said data characterizing at least one fourth directed graph;
- provoke transmission of data characterizing at least one second notification and of said data characterizing a third itinerary to be followed to said first mobile communication device and/or a third mobile communication device on the basis of said data characterizing at least one second identification parameter.

According to yet another object of the invention, a non-transitory computer readable medium includes instructions that when executed are operable to:
- receive data characterizing at least one itinerary request, wherein said data characterizing at least one itinerary request is transmitted by a first mobile communication device;
- determine data characterizing at least one first directed graph that simulates a current state of said rapid transit system;
- retrieve data characterizing disruptions occurring in said rapid transit system, wherein said data characterizing disruptions occurring in said rapid transit system is retrieved via a connection to an API;
- determine data characterizing at least one second directed graph that simulates a first future state of said rapid transit system on the basis of said data characterizing at least one itinerary request and said data characterizing disruptions occurring in said rapid transit system;
- determine data characterizing at least one value of the risk of at least one congestion incident occurring in said rapid transit system on the basis of said data characterizing at least one second directed graph that simulates a first future state of said rapid transit system;
- determine data characterizing a first itinerary to be followed on the basis of said data characterizing at least one value of the risk of at least one congestion occurring in said rapid transit system; and
- provoke transmission of said data characterizing a first itinerary to be followed to said first mobile communication device.

### BRIEF DESCRIPTION OF THE DRAWINGS

Practicable embodiments of the invention are described in further detail below by way of example only with reference to the accompanying drawings, which illustrate:
- figure 1, a schematic view of an apparatus for minimizing the number of congestion incidents in a rapid transit system in accordance with specific embodiments of the invention;
- figure 2A, a schematic visual representation of a rapid transit system in accordance with the present invention;
- figure 2B, a schematic visual representation of a rapid transit system in accordance with the present invention;
- figure 3A, a diagram of a method for minimizing the number of congestion incidents in a rapid transit system in accordance with specific embodiments of the invention;
- figure 3B, a diagram of a method for minimizing the number of congestion incidents in a rapid transit system in accordance with even more specific embodiments of the invention;
- figure 3C, a diagram of a method for minimizing the number of congestion incidents in a rapid transit system in accordance with even more specific embodiments of the invention;
- figure 4A, directed graphs determined in accordance with specific embodiments of the present invention; and
- figure 4B, directed graphs determined in accordance with specific embodiments of the present invention.

### DETAILED DESCRIPTION OF THE INVENTION

Aspects of the present invention can be understood by reference to the figures and description set forth herein. However, the following descriptions, and numerous specific details thereof, are given by way of illustration and not of limitation. Many changes and modifications to the specific descriptions may be made without departing from the spirit and scope of the claims, and the present invention includes all such modifications. It is to be understood that the embodiments may or may not overlap with each other. Thus, part of one embodiment, or specific embodiments thereof, may or may not fall within the ambit of another, or specific embodiments thereof, and vice versa. Additionally, the person skilled in the art understands that features or steps disclosed with respect to specific embodiments may be combined with features or steps disclosed with respect to other embodiments. Also, the person skilled in the art will understand that the terms "rapid transit system" should be interpreted in light of https://en.wikipedia.org/wiki/Rapid_transit, and that, as such, they relate to and include metros, subways, undergrounds or systems that exist in several airports, for instance the airport of Seattle.

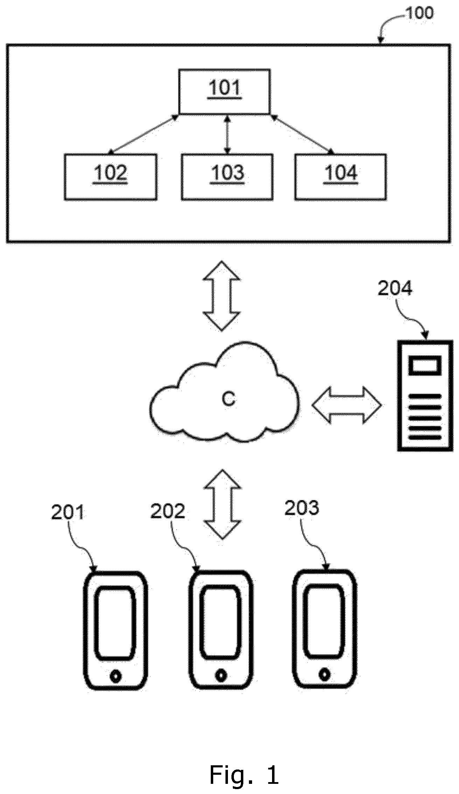

An apparatus 100 for minimizing the number of congestion incidents in a rapid transit system according to the invention is schematically illustrated on figure 1. The apparatus 100 according to the invention comprises a data processing module 101, comprising one or more processors, a data storage module 102, comprising at least one memory, an input and output module 103, which advantageously includes an API (Application Programming Interface), and a communication module 104 enabling the apparatus 100 to receive data and to provoke transmission of data form/over a communication channel C, so as to communicate with, at least, a first mobile communication device 201, a second mobile communication device 202, a third mobile communication device 203, and, preferably by means of the API included in the input and output module 103, with a remote server 204 that allows the apparatus 100 according to the invention to retrieve, periodically or continuously, at least data characterizing disruptions that occur in a rapid transit system. According to one embodiment, the apparatus 100 according to the invention consists of a computer. According to other embodiments, the apparatus 100 according to the invention includes a server, a supercomputer and/or any combination of such computer systems. And according to specific embodiments of the invention, the communication module 104 includes a network adaptor and/or interfaces for connecting to private or public communication networks (WAN, LAN, Internet).

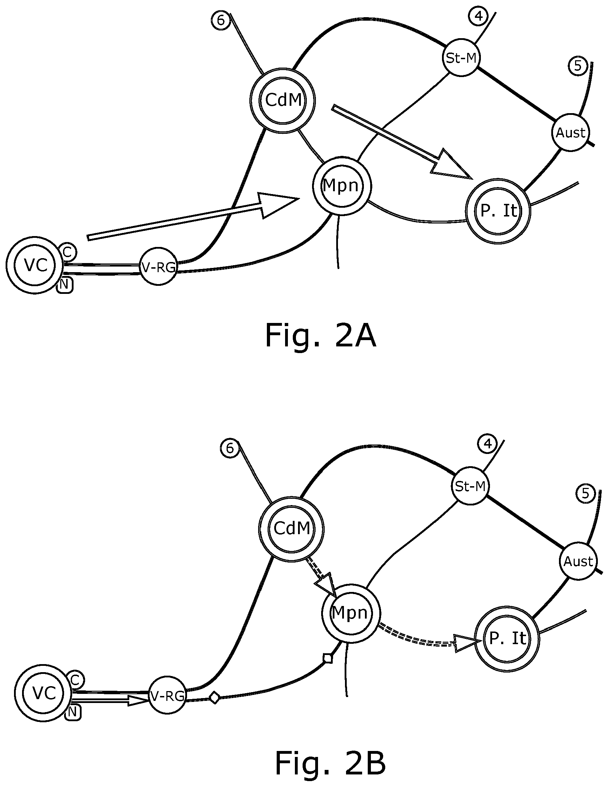

All the components described above enable the apparatus 100 according to the invention to perform a method for minimizing the number of congestion incidents in a rapid transit system, as described below in relation to the figures. In order to better understand the following description, a schematic visual representation of a rapid transit system is depicted on figures 2A and 2B, where figure 2A shows a first example of a visual representation of a rapid transit system that corresponds to a situation when no disruption occur in said rapid transit system, whereas figure 2B shows a second example of a visual representation of a rapid transit system in which a disruption occurs, namely a disruption in the rapid transit system that shuts down the direct link between the station "V-RG" and station "Mpn". A such disruption could be caused, for instance, by a vehicle being stuck between station "V-RG" and station "Mpn".

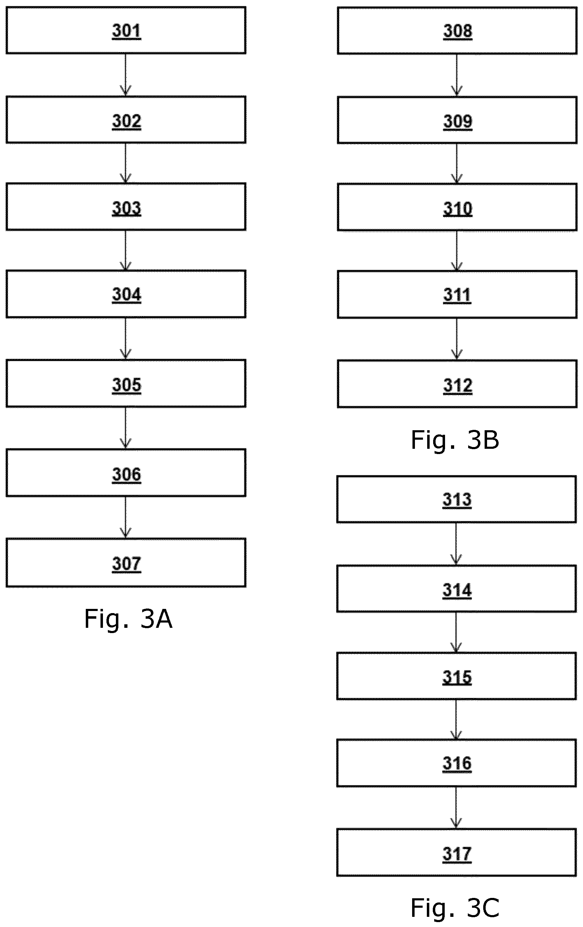

According to a first step 301 of the method for minimizing the number of congestion incidents in a rapid transit system according to one specific embodiment of the invention depicted on figure 3A, the apparatus 100 according to the invention is configured to receive data characterizing at least one itinerary request, wherein said data characterizing at least one itinerary request is transmitted by the first mobile communication device 201. Indeed, the first mobile communication device 201 runs an application, and so is the case for the second mobile communication device 202 and the third mobile communication device 203, which allows users to interact with the apparatus 100 according to the invention via the communication channel C. By means of a such application, a user can at least submit data characterizing at least one itinerary request. In particular, this happens when a user of a rapid transit system creates and submits an itinerary request in order to know which itinerary has to be followed while using a rapid transit system. One can for instance consider a very common situation in which a user of a rapid transit system wants to know how to use a rapid transit system in order, when starting at a departing point, for instance the station "Vc" illustrated on figure 2A, to reach a destination point, for instance the station "Mpn", in as less time as possible. And, according to the invention, in order to determine the itinerary to be followed that will turn out to be the quickest one, and that will allow a first user to reach his destination point without encountering a congestion incident, the first user will simply send a query to the apparatus 100 according to the invention by means of his mobile communication device 201.

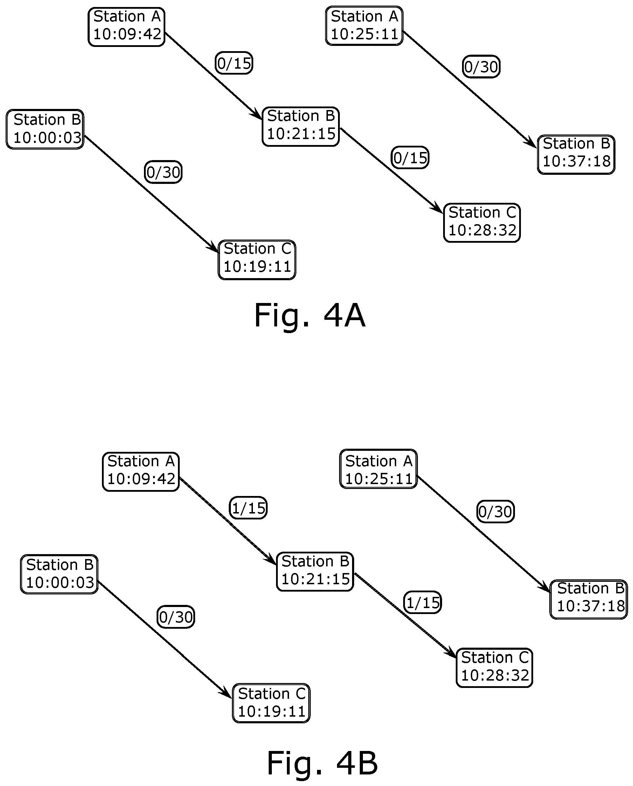

Then, according to a second step 302 of the method according to the invention, the apparatus 100 according to the invention is configured, as soon as it receives said data characterizing at least one itinerary request, to determine data characterizing at least one first directed graph that simulates a current state of said rapid transit system. In reality, the apparatus 100 according to the invention determines several directed graphs, each of them corresponding to a state of the rapid transit system at different points in time. A simplified visual representation of such directed graphs determined by the apparatus 100 according to the invention at this stage of the method according to the invention are schematically illustrated on figure 4A. For the sake of clarity, the graphs illustrated on figure 4A are meant to represent a rapid transit system which includes only three stations, namely stations A, B and C, and the numbers in the boxes indicate time points at which a service offer is delivered, i.e. times at which a vehicle will be present in each station. In addition, these graphs include directed arcs, schematically depicted as arrows, that correspond to the links between stations, and the numbers above the directed arcs are, on one hand, flows of people (indicated by numerators) that, at a specific time, are present on the directed arcs, i.e. flows of people that, at a specific time, are transported from one station to the other, and, on the other hand, the maximum capacity of each directed arc (indicated by denominators) before a congestion incident will occur. Thus, in the simplified example depicted on Figure 4A, one sees that, so far, at this stage of the method according to the invention, it is established that there aren't any flows of people that are transported from one station to the other (0 for each numerator), and that the maximum capacity of some directed arcs is set to thirty people while it is set to fifteen people for other directed arcs. The graphs depicted on figure 4A thus correspond to a starting situation in which the rapid transit system is totally free, which could actually be the case when the rapid transit system is in its closing hours or when, for any reason, no one uses the rapid transit system.

Then, according to a third step 303 of the method according to the invention, the apparatus 100 according to the invention is configured to retrieve data characterizing disruptions occurring in said rapid transit system, wherein said data characterizing disruptions occurring in said rapid transit system is retrieved via a connection to the dedicated API included in the input and output module 103. And, the connection to this API advantageously allows the apparatus 100 according to the invention to query the server 204, which role is at least to keep track of all disruptions that occur in the rapid transit system. By doing so, the apparatus 100 according to the invention will be able to determine whether one or more disruptions occur in the rapid transit system, and, referring to the example depicted on figure 2B, the apparatus 100 according to the invention will thus determine that a disruption is actually occurring between station "V-RG" and station "Mpn".

Then, according to a fourth step 304 of the method according to the invention, the apparatus 100 according to the invention is configured to determine data characterizing at least one second directed graph that simulates a first future state of said rapid transit system on the basis of said data characterizing at least one itinerary request and said data characterizing disruptions occurring in said rapid transit system. In other terms, the apparatus 100 according to the invention uses data characterizing at least one itinerary request that it received at the first step 301 and data characterizing disruptions occurring in said rapid transit system that it retrieved at the third step 303 to update the directed graphs that were determined at the second step 302. Visually, referring back to the simplified example previously described in relation to the second step 302 of the method according to the invention, this fourth step 304 allows the apparatus 100 according to the invention to again determine several directed graphs, for instance those depicted on figure 4B. In this simplified example, due to the data characterizing an itinerary request that has been received at step 301, one sees that the apparatus 100 according to the invention determined several directed graphs, in which the numerators of several directed arcs are updated in accordance with the itinerary request that was transmitted by the first mobile communication device 201 (instead of a "0" value the numerators are now updated with a "1" value, i.e. a flow that corresponds to one person, for those directed arcs of the directed graph that actually correspond to a vehicle that will drive through "station A" at 10h 09mn 42s, "station B" at 10h 21mn 15s and at "station C" on 10h 28mn 32s. The apparatus 100 according to the invention thus determined new directed graphs that consider that at least one user is going to follow an itinerary between stations A and C. Alternatively or cumulatively, for instance when it determines using said data characterizing disruptions occurring in the rapid transit system that one or more disruptions occur in the rapid transit system, the apparatus 100 according to the invention changes one or more denominators of the corresponding arcs so that, for these arcs, the numerator is equal to the denominator, or so that the denominator simply takes a "0" value (i.e. the maximum capacity for one or more directed arcs is null, allowing thereby to take into account an occurring disruption).

Then, according to a fifth step 305 of the method according to the invention, the apparatus 100 according to the invention is further configured to determine data characterizing at least one value of the risk of at least one congestion incident occurring in said rapid transit system on the basis of said data characterizing at least one second directed graph that simulates a first future state of said rapid transit system. According to some embodiments of the invention, the apparatus 100 according to the invention uses the directed graphs determined at the previous step 304 in order to determine if the maximum capacity (the denominators indicated for each directed arc) of one or more directed arcs of one or more graphs will be reached in the near future. In order to do that, the apparatus 100 according to the invention actually compares the present flows that are determined using said data characterizing an itinerary request and data characterizing disruptions that occur in the rapid transit system, and it compares such flows with the maximum capacity of each directed arc of each one of the previously determined direct graphs. Accordingly, the apparatus 100 according to the invention determines that a risk of congestion exists for one or more directed arcs of said at least one second directed graph, and it thus determines corresponding data characterizing at least one value of the risk of at least one congestion incident occurring in said rapid transit system that unambiguously establishes the existence of said risk, when it determines that the maximum capacity for one or some directed arcs will be reached in the near future. Alternatively, or cumulatively, according to other specific embodiments of the invention, the apparatus 100 according to the invention determines if, for some directed arcs, the numerator divided by the denominator exceeds a predefined threshold value (previously stored in the data storage module 102), and it determines accordingly data characterizing at least one value of the risk of at least one congestion incident occurring in said rapid transit system, which data unambiguously establishes the existence of said risk.

Then, according to a sixth step 306 of the method according to the invention, the apparatus 100 according to the invention is further configured to determine data characterizing a first itinerary to be followed on the basis of said data characterizing at least one value of the risk of at least one congestion occurring in said rapid transit system. For instance, if it is determined that one or more directed arcs of one or more directed graphs have reached their maximum capacity (or will reach it in the near future), the apparatus 100 according to the invention determines that such directed arcs cannot be selected to build the itinerary to be followed.

Alternatively, or cumulatively, according to more specific embodiments of the invention, the apparatus 100 according to the invention is further configured, while performing this sixth step 306, to determine data characterizing a first value of the duration a delay in relation to one or more arcs of the at least one second directed graph determined at the fourth step 304, for example those arcs for which the numerator divided by the denominator exceeds a predefined threshold value. For instance, when there are two arcs for which the numerator divided by the denominator exceeds a predefined threshold value, the apparatus 100 according to the invention computes a delay value that is induced on a journey over one arc, and so does it for the other arc. There could indeed be situations in which the duration of a delay for an arc that suffers a congestion incident is still less than the duration of a delay induced for an alternative arc, even if the alternative arc also suffers or will suffer a congestion incident (NB: the word "alternative" here should be interpreted by considering two directed arcs that could be selected in accordance with the previously established departing and destination points). In such a case, the apparatus 100 according to the invention will select for the first itinerary that is later provided to the user of the first mobile communication device 201 one or more arcs for which the duration of the delay is the shortest. In doing so, the apparatus 100 according to the invention thus determines an itinerary to be followed which selects directed arcs that either have not reached their maximum capacity, that is arcs for which it is unlikely that a congestion incident occurs or will occur in the near future, and/or, when congestion incidents cannot be avoided, arcs for which the duration of an induced delay is the smallest. As such, the apparatus according to the invention ensures that the first itinerary provided to a user of the first mobile communication device 201 is less likely to encounter a congestion incident, and/or, when congestion incidents cannot be avoided, taking into account an itinerary request that was originally submitted, so that one or more delays that may impact a journey of a user of the first mobile communication device 201 are of durations that are as short as possible.

Then, according to a seventh step 307 of the method according to the invention, the apparatus 100 according to the invention is further configured to provoke transmission of said data characterizing a first itinerary to be followed to said first mobile communication device 201. This is done by means of the communication module 104, which allows said data to be transmitted to the first mobile communication device 201 via the communication channel C. Accordingly, the user of the first mobile communication device 201 will be informed, via the application, about the first itinerary to be followed, either by means of notifications, with a map that is shown on a display of the first communication device 201 or by any other means of displaying information on a mobile communication device well known to the skilled person.

In addition, according to specific embodiments of the invention, the apparatus 100 according to the invention is also configured to further perform an eighth step 308 of determining data characterizing the availability of data characterizing an acknowledgement transmitted by said first mobile communication device 201. Indeed, the application executed on each mobile communication device is further configured to provide to the user, once data characterizing an itinerary to be followed is received, an opportunity for validating the itinerary that is proposed, for instance by means of a window that pops-up on a display of the mobile communication device in which the user is requested to either validate or deny the itinerary that is proposed (NB: the absence of validation is also considered as a denial). And, when the user validates or denies the proposed itinerary, or when he simply does not answer to the request that popped up, the application executed on the mobile device provokes transmission of said data characterizing an acknowledgment, via the communication channel C, that is then received by the apparatus 100 according to the invention. Accordingly, the apparatus 100 according to the invention may determine whether such data is available, when, for instance, such data is automatically stored in the data storage module 102 when it is received by the communication module 104.

Moreover, according to specific embodiments of the invention, the apparatus 100 according to the invention is also configured to further perform a ninth step 309 of determining data characterizing at least one third directed graph that simulates a second future state of said rapid transit system on the basis of said data characterizing the availability of data characterizing an acknowledgement transmitted by said first mobile communication device 201. This step allows the apparatus 100 according to the invention to keep track of whether the user of the first mobile communication device validated or denied the itinerary to be followed. Accordingly, the directed graphs determined at this stage of the method could thus be similar either to those illustrated on figure 4A (if the user denied the proposed itinerary, the numerators of the corresponding directed arcs that were included in the itinerary to be followed and which thus had a "1" value are changed to a "0" value) or to those illustrated on figure 4B (if the user validated the itinerary to be followed, a "1" value remains for the numerators of the corresponding directed arcs that were included in the itinerary to be followed).

Moreover, according to specific embodiments the invention, the step of determining data characterizing the availability of data characterizing an acknowledgement transmitted by said first mobile communication device 201 may comprise a step of determining data characterizing at least one location of said first mobile communication device 201. This may be achieved by means of a query sent by the apparatus 100 according to the invention to the first mobile communication device 201, which, upon reception by the first mobile communication device 201 of such query, triggers a transmission by the first mobile communication 201 of said data characterizing at least one location of said first mobile communication device 201, which is then received by the apparatus 100 according to the invention and stored upon reception in the data storage module 102. Alternatively, the location of the first mobile communication device 201 may be continuously monitored, for instance by the server 204 or using location determination means provided nowadays by most wireless communication networks (e.g. 4G, 5G,). In such situations, the apparatus 100 according to the invention will thus interact at this stage with those means that allow the location of the first mobile communication device 201 to be determined. And, as a consequence, when such additional steps are performed, the ninth step 309 of determining data characterizing at least one third directed graph that simulates a second future state of said rapid transit system includes a step of updating said data characterizing at least one third directed graph that simulates a second future state of said rapid transit system on the basis of said data characterizing at least one location of said first mobile communication device 201. For instance, by means of said data characterizing at least one location of said first mobile communication device 201, the apparatus 100 according to the invention may be able to determine that the first mobile communication device 201 deviated from the first itinerary to be followed that was proposed and validated, and will thus update the numerators of the corresponding directed arcs that were included in the first itinerary to be followed so that, for instance, those that had previously a "1" value will be affected a "0" value. Similarly, when it is determined that the first mobile communication device 201 did not deviate from the itinerary to be followed, values of corresponding numerators of directed arcs may be confirmed.

Additionally, according to specific embodiments of the invention, the apparatus 100 according to the invention is also configured to further perform a tenth step 310 of retrieving data characterizing at least one first identification parameter on the basis of said data characterizing at least one third directed graph that simulates a second future state of said rapid transit system. Indeed, one knows that there are eventually several users travelling in a rapid transit system at any time. Thus, at this stage, the apparatus 100 according to the invention is looking for other users that could be impacted by the journey of the first user. And, in order to do so, the apparatus 100 according to the invention performs this tenth step 310 which consists of retrieving at least one first identification parameter that identifies at least one second mobile communication device 202, that is at least one second user which journey will be impacted by the decision made by the user of the first mobile communication device 201 of, for instance, validating the first itinerary to be followed that was proposed to him. And this is possible because when users of mobile communication devices validate an itinerary to be followed that is proposed to them, the application of the mobile communication device does not send only data characterizing an acknowledgment as described above in relation to step 309, but it also sends data characterizing at least one identification parameter of the mobile communication device that validated the proposed itinerary. Such data characterizing at least one identification parameter can relate to an IMEI number, an IP address, a MAC address or any other identification parameter that allows the identification of a mobile communication device to be unambiguously determined. And this data, when received by the communication module 104, is also stored in the data storage module 102. Consequently, when the apparatus 100 according to the invention performs this tenth step 310, it actually determines whether one or more users will be impacted by the decision of the first user, and, when it is the case, that is when the apparatus 100 according to the invention determines that one or more other users will see their journey impacted by the decision of the first user to validate the first itinerary to be followed, it retrieves identification parameters of those mobile communication devices of those users that will be impacted, i.e. those users that will encounter congestion incidents.

Furthermore, according to specific embodiments of the invention, the apparatus 100 according to the invention is also configured to further perform an eleventh step 311 of determining data characterizing a second itinerary to be followed on the basis of said data characterizing at least one third directed graph that simulates a second future state of said rapid transit system. In particular, the apparatus 100 according to the invention determines an itinerary to be followed by the user of the second mobile communication device 202 (i.e. by a second user that is impacted by the decision of the first user because it creates a congestion incident that the second user will encounter), and it does so by taking into account all the aspects that have been previously explained (i.e. disruptions, validation or denial of an itinerary, deviation from a validated itinerary). Accordingly, the apparatus 100 according to the invention is at this stage able to determine a second itinerary to be followed by a second user in such a way that, overall, the number of congestion incidents occurring in the rapid system that are due to at least the first and a second user is minimized.

Alternatively, or cumulatively, in a similar way as above, according to even more specific embodiments of the invention, the apparatus 100 according to the invention is also configured, while performing this eleventh step 311, to determine data characterizing a second value of the duration of a delay in relation to one or more arcs of the at least one third directed graph determined at the ninth step 309 for which the numerator divided by the denominator exceeds a predefined threshold value. As previously explained, there may indeed be situations in which the duration of a delay for an arc that suffers a congestion incident is still less than the duration of a delay induced for an alternative arc, even if the alternative arc also suffers a congestion incident. Accordingly, the apparatus 100 according to the invention will select in the second itinerary that is later provided to the user of the second mobile communication device 202 one or more arcs for which the duration of a delay is the shortest. In doing so, the apparatus 100 according to the invention thus determines a second itinerary to be followed which also selects directed arcs that either have not reached their maximum capacity, that is arcs for which it is unlikely that a congestion incident occurs, and/or, when congestion incidents cannot be avoided, directed arcs for which the duration of an induced delay is the shortest. As such, the apparatus 100 according to the invention ensures that the second itinerary is also less likely to encounter congestion incidents, and/or, when congestion incidents cannot be avoided, so that one or more delays that may impact a journey of a user of the second mobile communication device 202 are of durations that are as short as possible.

Besides, according to specific embodiments of the invention, the apparatus 100 according to the invention is also configured to further perform a twelfth step 312 of provoking transmission of data characterizing at least one first notification and of said data characterizing a second itinerary to be followed to the at least one second mobile communication device 202 on the basis of said data characterizing at least one first identification parameter. In other terms, the apparatus 100 according to the invention uses the at least one first identification parameter which has been retrieved at the tenth step 310, that is at least one identification parameter of a mobile communication device of at least one user which journey will be impacted by the decision of the first user to validate the first itinerary to be followed that was proposed to him, to provoke transmission, via the communication module 104 and the communication channel C; of data characterizing at least one first notification (e.g. "your journey is impacted by a congestion incident), and of said data characterizing a second itinerary to be followed (e.g. "your new itinerary to avoid congestion incidents is .... , shown on this map and/or should be in line with this schedule"). Accordingly, a user of at least the second mobile communication device 202 will be notified via the application about a second itinerary to be followed.

In addition, according to specific embodiments of the invention, the apparatus 100 according to the invention is also configured to further perform a thirteenth step 313 of determining data characterizing the availability of data characterizing an acknowledgment transmitted by said second mobile communication device 202. As explained above for the first mobile communication device 201 in relation to the eighth step 308, the application executed on each mobile communication device is configured to provide to the user, upon reception of data characterizing an itinerary to be followed, an opportunity for validating the itinerary that is shown. This, of course applies as well to the second mobile communication device 202. Thus, when the user of the second mobile communication device 202 validates the second itinerary proposed and received by the second mobile communication device 202 in consequence of the twelfth step 312 described just above, the application executed on the second mobile communication device 202 provokes transmission of said data characterizing an acknowledgment, via the communication channel C, that is then received by the apparatus 100 according to the invention. Accordingly, the apparatus 100 according to the invention may determine whether such data is available.

Moreover, according to specific embodiments of the invention, the apparatus 100 according to the invention is also configured to further perform a fourteenth step 314 of determining data characterizing at least one fourth directed graph that simulates a third future state of said rapid transit system on the basis of said data characterizing the availability of an acknowledgement transmitted by said second mobile communication device 202. As explained above, this step allows the apparatus 100 according to the invention to keep track of whether the user of the second mobile communication device 202 validated or denied the second itinerary to be followed that was proposed to him. Accordingly, the directed graphs determined at this stage of the method could also be similar to those illustrated on figures 4A or 4B. For instance, if both the first and the second users validated the itineraries to be followed that was proposed to them, a "2" value could for instance be affected to one or more numerators of one or more directed arcs of one or more of the at least one fourth directed graph. For instance, if one considers the arrows on figure 2A to illustrate the itinerary requests that have been simultaneously submitted by the first and the second user by means of the first 201, respectively, the second mobile communication device 202, one sees that several arcs could be used by both users (the first user wants to go from station "Vc" to station "Mpn" while the second user submitted as departing point station "CdM" and as destination station "P.It").

Moreover, according to specific embodiments of the invention, the step of determining data characterizing the availability of data characterizing an acknowledgement transmitted by said second mobile communication device 202 may comprise a step of determining data characterizing at least one location of said second mobile communication device 202. As explained above, this may be achieved by means of a query sent by the apparatus 100 according to the invention to the second mobile communication device 202, which, upon reception by the second mobile communication device 202 of such query, triggers a transmission by the second mobile communication 202 of said data characterizing at least one location of said second mobile communication device 202, which is then received by the apparatus 100 according to the invention and stored upon reception in the data storage module 102. Also, as described above in relation to the first mobile communication device 201, the location of the second communication device 202 may be continuously monitored, for instance by the server 204 or by means of location determination means provided nowadays by most public wireless communication networks. In such situations, the apparatus 100 according to the invention will thus interact at this stage with those means that allow the location of the second mobile communication device 202 to be determined. And, as a consequence, when such additional steps are performed, the fourteenth step 314 of determining data characterizing at least one fourth directed graph that simulates a third future state of said rapid transit system includes a step of updating said data characterizing at least one fourth directed graph that simulates a third future state of said rapid transit system on the basis of said data characterizing at least one location of said second mobile communication device 202. For instance, by means of said data characterizing at least one location of said second mobile communication device 202, the apparatus 100 according to the invention is able to determine whether the second mobile communication device 202 deviated from the second itinerary to be followed, and it will thus update the numerators of the corresponding directed arcs that were included in the second itinerary to be followed. Similarly, when it is determined that the second mobile communication device 202 did not deviate from the second itinerary to be followed, values of corresponding numerators may be confirmed.

Moreover, according to specific embodiments of the invention, the apparatus 100 according to the invention is also configured to further perform a fifteenth step 315 of retrieving data characterizing at least one second identification parameter on the basis of said data characterizing at least one fourth directed graph that simulates a third future state of said rapid transit system. Indeed, as explained above in relation to the tenth step 310, the apparatus 100 according to the invention is again looking for other users that could be impacted by the journeys of the first and/or the second user. As a consequence, the apparatus 100 according to the invention performs this fifteenth step 315 which consists of retrieving at least one second identification parameter that unambiguously identifies at least one third mobile communication device 203, that is at least one third user, in particular at least one third mobile communication device 203 that will have his journey impacted by the decision made by the first and/or the second user of the first and/or the second mobile communication devices 201 and 202 of, for instance, validating the first and/or the second itineraries to be followed that was proposed to them. And, as previously described, this can be achieved because when users of mobile devices validate an itinerary to be followed that is proposed to them (or when they don't or when they simply don't answer), the application of the mobile communication device sends data characterizing at least one identification parameter of the mobile communication device that validated or denied a proposed itinerary. As a result, when the apparatus 100 according to the invention performs this fifteenth step 315, it actually determines whether one or more users will be impacted by the decision of the first and the second users, i.e. they will encounter congestion incidents, and, when it is the case, that is when the apparatus 100 determines that one or more other users will be impacted by the decision of the first user and/or the second, it retrieves identification parameters of the mobile communication devices of those users that will be impacted.

Additionally, according to specific embodiments of the invention, the apparatus 100 according to the invention is also configured to further perform a sixteenth step 316 of determining data characterizing a third itinerary to be followed on the basis of said data characterizing at least one fourth directed graph that simulates a third future state of said rapid transit system. In particular, the apparatus 100 according to the invention determines an itinerary to be followed by either the first and/or a third mobile communication devices 201 and 203 (i.e. by the first or a third user that will be impacted by the decisions of the first and/or the second users because those decisions create one or more congestion incidents that the first and/or a third user will encounter), and it does so by taking into account all the aspects that have been previously explained (i.e. disruptions, validations or denials of itineraries, deviations from validated itineraries). Accordingly, the apparatus 100 according to the invention is at this stage able to determine a third itinerary to be followed by the first and/or a third user in such a way that, overall, the number of congestion incidents occurring in the rapid transit system is minimized, in particular the number of congestion incidents that could occur because of the itineraries that the first, the second and/or a third user follow.

Alternatively, or cumulatively, in a similar way as above, according to even more specific embodiments of the invention, the apparatus 100 according to the invention is also configured, while performing this sixteenth step 316, to determine data characterizing a third value of the duration of a delay in relation to one or more arcs of the at least one fourth directed graph determined at the fourteenth step 314 for which the numerator divided by the denominator exceeds a predefined threshold value. As previously explained, there may indeed be situations in which the duration of a delay for an arc that suffers a congestion incident is still less than the duration of a delay induced for an alternative arc, even if the alternative arc also suffers a congestion incident. Accordingly, the apparatus 100 according to the invention will select in the third itinerary that is later provided to the first and/or a third user one or more arcs for which the duration of a delay is the shortest. In doing so, the apparatus 100 according to the invention thus determines a third itinerary to be followed which also selects directed arcs that either have not reached their maximum capacity, that is arcs for which it is unlikely that a congestion incident occurs, and/or, when congestion incidents cannot be avoided, arcs for which the duration of an induced delay is the shortest. As such, the apparatus 100 according to the invention ensures that the third itinerary is also less likely to encounter congestion incidents, and/or, when congestion incidents cannot be avoided, so that one or more delays that may impact other users are of durations that are as short as possible.

Moreover, according to specific embodiments of the invention, the apparatus 100 according to the invention is also configured to further perform a seventeenth step 317 of provoking transmission of data characterizing at least one second notification and of said data characterizing a third itinerary to be followed to said first mobile communication device 201 and/or a third mobile communication device 203 on the basis of said data characterizing at least one second identification parameter. In other terms, here again, the apparatus 100 according to the invention uses the at least one second identification parameter which has been retrieved at the fourteenth step 314, that is at least one identification parameter of a mobile communication device of at least one user which journey will be impacted by the decision of other users, to provoke transmission, via the communication module 104 and the communication channel C, of data characterizing at least one second notification (e.g. "your journey is impacted by congestion incident), and of said data characterizing a third itinerary to be followed (e.g. "your new itinerary to avoid congestion incidents is .... , shown on this map, and/or should be in line with this schedule"). Accordingly, a user of at least the first and/or a third mobile communication device will be notified via the application about a third itinerary to be followed.

Also, according to specific embodiments of the invention, the fourth step 304 of determining data characterizing at least one second directed graph that simulates a first future state of said rapid transit system may comprise a step of determining data characterizing at least one directed arc of said second directed graph that simulates a first future state of said rapid transit system which cannot be modified. Similarly, according to specific embodiments of the invention, the eighth step 308 of determining data characterizing at least one third directed graph that simulates a second future state of said rapid transit system may also comprise a step of determining data characterizing at least one directed arc of said third directed graph that simulates a second future state of said rapid transit system which cannot be modified. Likewise, according to specific embodiments of the invention, the thirteenth step 313 of determining data characterizing at least one fourth directed graph that simulates a third future state of said rapid transit system may also comprise a step of determining data characterizing at least one directed arc of said fourth directed graph that simulates a third future state of said rapid transit system which cannot be modified. These additional steps advantageously allow the apparatus 100 according to the invention to be faster for determining directed graphs, and, thus, for minimizing overall the number of congestion incidents in a rapid transit system. Indeed, if, for instance, at least one second directed graphs is determined at one point in time, the apparatus 100 according to the invention determines that arcs of graphs that originated before that point in time cannot be modified. Similarly, it may also be determined that arcs of graphs that relate to itineraries of users that did not validate their itineraries cannot be modified either. This allows the apparatus 100 according to the invention, when determining directed graphs, to discard the arcs that relate to itineraries for which no validation has been received, and by doing so, the apparatus 100 according to the invention may drastically reduce the time it needs for providing to users itineraries that won't suffer congestions. This also advantageously allows the apparatus 100 according to the invention to minimize the number of congestion incidents in a rapid transit system.

## Claims

1. A method for minimizing the number of congestion incidents in a rapid transit system, wherein said method comprises the steps of:
• receiving data characterizing at least one itinerary request, wherein said data characterizing at least one itinerary request is transmitted by a first mobile communication device (201);
• determining data characterizing at least one first directed graph that simulates a current state of said rapid transit system;
• retrieving data characterizing disruptions occurring in said rapid transit system, wherein said data characterizing disruptions occurring in said rapid transit system is retrieved via a connection to an API;
• determining data characterizing at least one second directed graph that simulates a first future state of said rapid transit system on the basis of said data characterizing at least one itinerary request and said data characterizing disruptions occurring in said rapid transit system;
• determining data characterizing at least one value of the risk of at least one congestion incident occurring in said rapid transit system on the basis of said data characterizing at least one second directed graph that simulates a first future state of said rapid transit system;
• determining data characterizing a first itinerary to be followed on the basis of said data characterizing at least one value of the risk of at least one congestion occurring in said rapid transit system; and
• provoking transmission of said data characterizing a first itinerary to be followed to said first mobile communication device (201).

2. The method of claim 1, wherein said method further comprises the steps of:
• determining data characterizing the availability of data characterizing an acknowledgement transmitted by said first mobile communication device (201);
• determining data characterizing at least one third directed graph that simulates a second future state of said rapid transit system on the basis of said data characterizing the availability of data characterizing an acknowledgement transmitted by said first mobile communication device (201);
• retrieving data characterizing at least one first identification parameter on the basis of said data characterizing at least one third directed graph that simulates a second future state of said rapid transit system;
• determining data characterizing a second itinerary to be followed on the basis of said data characterizing at least one third directed graph that simulates a second future state of said rapid transit system; and
• provoking transmission of data characterizing at least one first notification and of said data characterizing a second itinerary to be followed to at least one second mobile communication device (202) on the basis of said data characterizing at least one first identification parameter.

3. The method of claim 2, wherein said method further comprises the steps of:
• determining data characterizing the availability of data characterizing an acknowledgment transmitted by said second mobile communication device (202);
• determining data characterizing at least one fourth directed graph that simulates a third future state of said rapid transit system on the basis of said data characterizing the availability of an acknowledgement transmitted by said second mobile communication device (202);
• retrieving data characterizing at least one second identification parameter on the basis of said data characterizing at least one fourth directed graph that simulates a third future state of said rapid transit system;
• determining data characterizing a third itinerary to be followed on the basis of said data characterizing at least one fourth directed graph; and
• provoking transmission of data characterizing at least one second notification and of said data characterizing a third itinerary to be followed to said first mobile communication device (201) and/or a third mobile communication device (203) on the basis of said data characterizing at least one second identification parameter.

4. The method of claim 2, wherein the step of determining data characterizing the availability of data characterizing an acknowledgement transmitted by said first mobile communication device (201) comprises a step of determining data characterizing at least one location of said first mobile communication device (201) and the step of determining data characterizing at least one third directed graph that simulates a second future state of said rapid transit system comprises a step of updating said data characterizing at least one third directed graph that simulates a second future state of said rapid transit system on the basis of said data characterizing at least one location of said first mobile communication device (201).

5. The method of claim 3, wherein the step of determining data characterizing the availability of data characterizing an acknowledgement transmitted by said second mobile communication device (202) comprises a step of determining data characterizing at least one location of said second mobile communication device (202) and the step of determining data characterizing at least one fourth directed graph that simulates a third future state of said rapid transit system comprises a step of updating said data characterizing at least one fourth directed graph that simulates a third future state of said rapid transit system on the basis of said data characterizing at least one location of said second mobile communication device (202).

6. The method of claim 1, wherein the step of determining data characterizing at least one second directed graph that simulates a first future state of said rapid transit system comprises a step of determining data characterizing at least one directed arc of said second directed graph that simulates a first future state of said rapid transit system which cannot be modified.

7. The method of claim 2, wherein the step of determining data characterizing at least one third directed graph that simulates a second future state of said rapid transit system comprises a step of determining data characterizing at least one directed arc of said third directed graph that simulates a second future state of said rapid transit system which cannot be modified.

8. The method of claim 3, wherein the step of determining data characterizing at least one fourth directed graph that simulates a third future state of said rapid transit system comprises a step of determining data characterizing at least one directed arc of said fourth directed graph that simulates a third future state of said rapid transit system which cannot be modified.

9. The method of one of the preceding claims, wherein the step of determining data characterizing a first itinerary to be followed comprises a step of determining data characterizing a first value of the duration a delay.

10. The method of one of claims 2-5 and 7-9, wherein the step of determining data characterizing a second itinerary to be followed comprises a step of determining data characterizing a second value of the duration of a delay.

11. The method of one of claims 3, 5 and 8, wherein the step of determining data characterizing a third itinerary to be followed comprises a step of determining data characterizing a third value of the duration of a delay.

12. An apparatus (100) for minimizing the number of congestion incidents in a rapid transit system, said apparatus comprising:
at least one processor; and
at least one memory including computer program code for one or more programs; the at least one memory and the computer program code configured to, with the at least one processor, cause the apparatus to at least:
• receive data characterizing at least one itinerary request, wherein said data characterizing at least one itinerary request is transmitted by a first mobile communication device (201);
• determine data characterizing at least one first directed graph that simulates a current state of said rapid transit system;
• retrieve data characterizing disruptions occurring in said rapid transit system, wherein said data characterizing disruptions occurring in said rapid transit system is retrieved via a connection to an API;
• determine data characterizing at least one second directed graph that simulates a first future state of said rapid transit system on the basis of said data characterizing at least one itinerary request and said data characterizing disruptions occurring in said rapid transit system;
• determine data characterizing at least one value of the risk of at least one congestion incident occurring in said rapid transit system on the basis of said data characterizing at least one second directed graph that simulates a first future state of said rapid transit system;
• determine data characterizing a first itinerary to be followed on the basis of said data characterizing at least one value of the risk of at least one congestion occurring in said rapid transit system; and
• provoke transmission of said data characterizing a first itinerary to be followed to said first mobile communication device (201).

13. The apparatus of claim 12, wherein the at least one memory and the computer program code configured to, with the at least one processor, cause the apparatus to at least:
• determine data characterizing the availability of data characterizing an acknowledgement transmitted by said first mobile communication device (201);
• determine data characterizing at least one third directed graph that simulates a second future state of said rapid transit system on the basis of said data characterizing the availability of data characterizing an acknowledgement transmitted by said first mobile, communication device (201);
• retrieve data characterizing at least one first identification parameter on the basis of said data characterizing at least one third directed graph that simulates a second future state of said rapid transit system;
• determine data characterizing a second itinerary to be followed on the basis of said data characterizing at least one third directed graph that simulates a second future state of said rapid transit system; and
• provoke transmission of data characterizing at least one first notification and of said data characterizing a second itinerary to be followed to at least one second mobile communication device (202) on the basis of said data characterizing at least one first identification parameter.

14. The apparatus of claim 13, wherein the at least one memory and the computer program code configured to, with the at least one processor, cause the apparatus to at least:
• determine data characterizing the availability of data characterizing an acknowledgment transmitted by said second mobile communication device (202);
• determine data characterizing at least one fourth directed graph that simulates a third future state of said rapid transit system on the basis of said data characterizing the availability of an acknowledgement transmitted by said second mobile communication device (202);
• retrieve data characterizing at least one second identification parameter on the basis of said data characterizing at least one fourth directed graph that simulates a third future state of said rapid transit system;
• determine data characterizing a third itinerary to be followed on the basis of said data characterizing at least one fourth directed graph; and
• provoke transmission of data characterizing at least one second notification and of said data characterizing a third itinerary to be followed to said first mobile communication device (201) and/or a third mobile communication device (203) on the basis of said data characterizing at least one second identification parameter.

15. A non-transitory computer readable medium including instructions that when executed are operable to:
• receive data characterizing at least one itinerary request, wherein said data characterizing at least one itinerary request is transmitted by a first mobile communication device (201);
• determine data characterizing at least one first directed graph that simulates a current state of said rapid transit system;
• retrieve data characterizing disruptions occurring in said rapid transit system, wherein said data characterizing disruptions occurring in said rapid transit system is retrieved via a connection to an API;
• determine data characterizing at least one second directed graph that simulates a first future state of said rapid transit system on the basis of said data characterizing at least one itinerary request and said data characterizing disruptions occurring in said rapid transit system;
• determine data characterizing at least one value of the risk of at least one congestion incident occurring in said rapid transit system on the basis of said data characterizing at least one second directed graph that simulates a first future state of said rapid transit system;
• determine data characterizing a first itinerary to be followed on the basis of said data characterizing at least one value of the risk of at least one congestion occurring in said rapid transit system; and
• provoke transmission of said data characterizing a first itinerary to be followed to said first mobile communication device (201).
